(19) Europäisches Patentamt / European Patent Office / Office européen des brevets

(11) **EP 3 407 208 A1**

(12) **EUROPEAN PATENT APPLICATION**

(43) Date of publication:
**28.11.2018 Bulletin 2018/48**

(51) Int Cl.:
**G06F 17/30** (2006.01)          G06N 3/04 (2006.01)

(21) Application number: **17172311.7**

(22) Date of filing: **22.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fujitsu Limited**
**Kawasaki-shi, Kanagawa 211-8588 (JP)**

(72) Inventor: **HU, Bo**
**Winchester, SO23 7DT (GB)**

(74) Representative: **Haseltine Lake LLP**
**Lincoln House, 5th Floor**
**300 High Holborn**
**London WC1V 7JH (GB)**

(54) **ONTOLOGY ALIGNMENT APPARATUS, PROGRAM, AND METHOD**

(57)     Embodiments include: an ontology alignment apparatus, comprising processor hardware and memory hardware coupled to the processor hardware, the memory storing a plurality of ontologies for alignment, each of the plurality of ontologies defining a hierarchical structure of named concepts, the ontology comprising named concepts and relationships linking pairs of named concepts, the relationships including subsumption relationships, each named concept being named by a respectively assigned label, the processor being configured to perform, for each of the plurality of ontologies:

- an initial embedding process, comprising: for every word appearing in the labels assigned to named concepts defined by the ontology, obtaining an initial word vector representation of the word;
- a syntactical embedding process, comprising: in respect of each concept defined by the ontology, forming a set of words comprising: each word in the label assigned to the respective concept; and each word in the label assigned to each concept linked to the respective concept by a subsumption relationship; compiling a syntactical concept matrix comprising, for each concept defined by the ontology, a syntactical concept vector representing the concept and comprising the initial word vector representation of each word in the respective set of words;
- a projecting process comprising: obtaining a set of projections by projecting each of the syntactical concept vectors for the ontology onto a notional space common to the plurality of ontologies.

The processor being further configured to perform, for the plurality of ontologies collectively:
- a rotational alignment process comprising: rotating the sets of projections relative to one another in the notional space to maximise the mutual rotational alignment between the sets; and
- a mapping process comprising: determining, for target projections among the set of projections for an ontology among the plurality of ontologies, a spatially closest projection from each of the other sets of projections in the notional space after said rotating, and adding to a mapping registry a registry entry mapping the concept represented by the vector of the target projection to the or each of the concepts respectively represented by the vector or vectors of the spatially closest projections.

ontologies for alignment

ontology alignment apparatus 100

| processor 110 | memory 120 |

ontology mapping

FIGURE 1

## EP 3 407 208 A1

**Description**

The invention lies in the field of machine to machine inter-operability, and in particular relates to the automated aligning of heterogeneous ontologies or ontology-like models overlapping in subject matter area.

Ontology alignment enables heterogeneous models of the same domain to be mapped to one another, thereby enabling inter-operability of functions and operations previously (before alignment) executing on data instantiating one of the ontologies, and therefore is a key technology in the field of machine to machine communication and machine to machine intero-operability.

Ontology alignment is an intensively investigated area. Thus far, typical ontology alignment approaches are, for a given source ontology and target ontology:

1. Compute string similarity between every pair of entities from source and target ontologies;
2. Extend the above with information from parent concepts (through the "is-a" relationship);
3. Extend the above with information from sibling concepts (sharing the same "parent" concepts with the concepts to be aligned);
4. Extend the above with instance information (if applicable) and applying set theory;
5. Leveraging a concept hierarchy to propagate similarity of anchor concepts (of which the similarity is known or may be confirmed);
6. Extending concept definition with external data sources, e.g.

   a. A third ontology as interlingua between the source and target ontologies
   b. Unstructured textual data sources (such as wikipedia) for enrichment
   c. Other types of unstructured data (such as images) for enrichment

The following inefficiencies are identified in the current approaches:

1. Heavy human involvement: though some approaches declare themselves to be unsupervised approaches, human involvement is still necessary as most such approaches present a significant error margin that have to be verified by human experts;
2. Lack of semantics: most of the current approaches based on symbolic similarities with or without structural enhancement and do not take into account formalised semantics;
3. Expensive: current approaches rely on good naming conventions. If ontological entities are named randomly, the alignment has to traverse entire ontological graphs, presenting high complexity and computational cost. Meanwhile, approaches observing ontological structures are normally carried out iteratively. Iterative graph algorithms are general very expensive;
4. Lack of inter-lingua: if the ontology is composed in different natural language, current approaches normally present low unsatisfactory accuracy;
5. Lack of flexibility: ontologies are aligned in pairs (given one ontology as source ontology and one as target ontology).

It is desirable to provide an automated ontology alignment apparatus that improves upon one or more aspects of the present state of the art.

STATEMENTS OF INVENTION

Embodiments include: an ontology alignment apparatus, comprising processor hardware and memory hardware coupled to the processor hardware, the memory storing a plurality of ontologies for alignment, each of the plurality of ontologies defining a hierarchical structure of named concepts, the ontology comprising named concepts and relationships linking pairs of named concepts, the relationships including subsumption relationships, each named concept being named by a respectively assigned label, the processor being configured to perform, for each of the plurality of ontologies:

- an initial embedding process, comprising: for every word appearing in the labels assigned to named concepts defined by the ontology, obtaining an initial word vector representation of the word;
- a syntactical embedding process, comprising: in respect of each concept defined by the ontology, forming a set of words comprising: each word in the label assigned to the respective concept; and each word in the label assigned to each concept linked to the respective concept by a subsumption relationship; compiling a syntactical concept matrix comprising, for each concept defined by the ontology, a syntactical concept vector representing the concept and comprising the initial word vector representation of each word in the respective set of words;
- a projecting process comprising: obtaining a set of projections by projecting each of the syntactical concept vectors for the ontology onto a notional space common to the plurality of ontologies.

The processor being further configured to perform, for the plurality of ontologies collectively:

- a rotational alignment process comprising: rotating the sets of projections relative to one another in the notional space to maximise the mutual rotational alignment between the sets; and
- a mapping process comprising: determining, for target projections among the set of projections for an ontology among the plurality of ontologies, a spatially closest projection from each of the other sets of projections in the notional space after said rotating, and adding to a mapping registry a registry entry mapping the concept represented by the vector of the target projection to the or each of the concepts respectively represented by the vector or vectors of the spatially closest projections.

Advantageously, embodiments leverage spatial properties of the vector representations of the concepts in the ontologies as a basis for comparison and alignment. This is extremely computationally efficient when compared to existing approaches. The composition of the set of words for each concept ensure that the vector representations are meaningful and comparable both within the ontology and across multiple ontologies. The term ontology is taken to mean a representation of an ontology in data, and may include an ontology-like model. Furthermore, the ontology may be represented in OWL or XML formats.

In addition, embodiments may yield one or more of the following advantages:

- Ontology alignment that is not dominated and deviated by symbolic presentations of ontologic entities
- More grounded similarity values (based proper probabilistic measures)
- The symbolic-independent approach may avoid the matching being biased by linguistic variance due to the inter- or intra-individual naming variance
- Embodiments provide an unsupervised approach to reduce human involvement and thus improve system efficiency from a user-perspective.

Aligned ontologies facilitate communications among machines or between machines and humans in areas such multi-agent systems, semantic web applications, etc.

The syntactical embedding process may further comprise:

- training an artificial neural network to modify the syntactical concept vectors by executing a word classification algorithm on a plurality of training vector pairs each comprising one of the syntactical concept vectors and one of the word vector representations of a word in the respective set of words;
- obtaining a modified syntactical concept vector for each concept by feeding forward through the trained artificial neural network the respective syntactical concept vector from the syntactical concept matrix; wherein the syntactical concept vectors projected in the projecting process are the modified syntactical concept vectors.

The artificial neural network improves the accuracy of the word vector representations of the concepts, which in turn results in enhanced accuracy in the ontology alignment process.

In addition to the semantic embedding, the processor may be being further configured to perform, for each of the ontologies, a semantic embedding process comprising:

- for each concept defined by the ontology, executing a series of unfolding processes on the concept, each unfolding process corresponding to an ontology unfolding rule and producing a respective unfolded concept comprising a group of atomic formulae;
- compiling a semantic concept matrix comprising, for each concept defined by the ontology, a semantic concept vector comprising a component for each atomic formula in the group of atomic formulae of the respective unfolded concept.

Wherein the projecting process further comprises:

- obtaining semantic projections by projecting each of the semantic concept vectors for the ontology onto the notional space common to the plurality of ontologies, and adding the semantic projections to the set of projections for the respective ontology; or wherein the projection for each concept is a sum or concatenation of the modified syntactical concept vector and the modified semantic concept vector.

Advantageously, embodiments may be used in automated, unsupervised alignment of structured knowledge models, in particular ontology alignment, where semantics are not always captured during the alignment process. Aligned ontologies facilitate communications among machines or between machines and humans in areas such multi-agent systems, semantic web applications, etc.

A semantic concept vector comprises the initial vector representations of each unit (non-unfoldable) formula in the resultant accumulative finite set of formulae for each of the executed unfolding processes. The values of the components for the semantic concept vector may be a summation of the initial word vector representations of the words appearing in the respective atomic formula. Alternatively, the semantic concept vector may be randomly initialised with a random real numeric value assigned to the respective formula, or a summation of generic embedding values of the words appearing in the respective formula.

The semantic embedding process may further comprise:

- training an artificial neural network to modify the semantic concept vectors by executing a word classification algorithm on a plurality of training vector pairs each comprising one of the semantic concept vectors and one of the semantic concept vector component atomic formulae;
- obtaining a modified semantic concept vector for each concept by feeding forward through the trained artificial neural network the respective semantic concept vector from the semantic concept matrix;

wherein the semantic concept vectors projected in the projecting process are the modified semantic concept vectors.

The artificial neural network improves the accuracy of the semantic concept vectors, which in turn improves the accuracy of the ontology alignment.

Optionally, the artificial neural network trained to modify the syntactical concept vectors is a separate artificial neural network from the artificial neural network trained to modify the semantic concept vectors.

In this particular network arrangement, individual and separate artificial neural networks, which may be single-layer, are used for the semantic- and syntactical concept vectors.

As an alternative artificial neural network arrangement, the artificial neural network trained to modify the syntactical concept vectors is the same artificial neural network as the artificial neural network trained to modify the semantic concept vectors.

In a particular artificial neural network arrangement, the artificial neural network comprises: in a first layer, a first set of adjustable parameters operating on the syntactical concept vectors; and in the first layer, a second set of adjustable parameters operating on the semantic concept vectors and separate from the first set of adjustable parameters; and in a second layer, a third set of adjustable parameters operating on both the results of the first set of adjustable parameters operating on the syntactical concept vectors and the results of the second set operating on the semantic concept vectors; and training the artificial neural network includes executing a stochastic gradient descent algorithm to minimise an aggregate of distances between the modified syntactical vector and the modified semantic vector for the same concept.

Advantageously, combining the artificial neural network in this way provides a feedback mechanism for the configuration (adjusting) of the adjustable parameters.

In a particular example of the initial embedding, in the initial embedding process, the initial word vector representation of each word is a one-hot vector.

One-hot embedding provides a quick and computationally efficient mechanism for obtaining a basic quantitative representation of each word.

Furthermore, in the initial embedding process, the initial word vector representation of each word may be obtained by executing a pretrained unsupervised algorithm for word vector representation.

Examples include GloVe (global vector for word representation) and Word2Vec. Algorithms such as these provide accurate word vector representations of concept words.

Optionally, in the plurality of ontologies, the relationships linking pairs of named concepts are named relationships, each relationship being named by a respectively assigned label, and in the syntactical embedding process, the set of words further comprises: each word in the labels assigned to relationships linking the concept to other concepts.

Advantageously, the additional information improves the accuracy of the syntactical embedding process.

Embodiments of another aspect include a computer-implemented ontology alignment method, comprising:

- storing a plurality of ontologies for alignment, each of the plurality of ontologies defining a hierarchical structure of named concepts, the ontology comprising named concepts and relationships linking pairs of named concepts, the relationships including subsumption relationships, each named concept being named by a respectively assigned label.

The method further comprising, performing, for each of the plurality of ontologies:

- an initial embedding process, comprising: for every word appearing in the labels assigned to named concepts defined by the ontology, obtaining an initial word vector representation of the word;
- a syntactical embedding process, comprising: in respect of each concept defined by the ontology, forming a set of words comprising: each word in the label assigned to the respective concept; and each word in the label assigned to each concept linked to the respective concept by a subsumption relationship; compiling a syntactical concept matrix comprising, for each concept defined by the ontology, a syntactical concept vector representing the concept and comprising the initial word vector representation of each word in the respective set of words;
- a projecting process comprising: obtaining a set of projections by projecting each of the syntactical concept vectors for the ontology onto a notional space common to the plurality of ontologies.

The method further comprising performing, for the plurality of ontologies collectively:

- a rotational alignment process comprising: rotating the sets of projections relative to one another in the notional space to maximise the mutual rotational alignment between the sets; and
- a mapping process comprising: determining, for target projections among the set of projections for an ontology among the plurality of ontologies, a spatially closest projection from each of the other sets of projections in the notional space after said rotating, and adding to a mapping registry a registry entry mapping the concept represented by the vector of the target projection to the or each of the concepts respectively represented by the vector or vectors of the spatially closest projections.

Embodiments of another aspect include a computer program which, when executed by a computing apparatus, causes the computing apparatus to perform a method of an embodiment. Such a computer program may be stored on a computer-readable medium such as a non-transitory computer-readable medium.

DETAILED DESCRIPTION

Preferred features of the present invention will now be described, purely by way of example, with reference to the accompanying drawings, in which:-

Figure 1 illustrates an ontology alignment apparatus;
Figure 2 illustrates a procedure performed by the ontology alignment apparatus;
Figure 3 illustrates concept embedding processes;
Figure 4a illustrates a sample ontology;
Figure 4b illustrates a syntactical concept vector representation of the sample ontology;
Figure 5 illustrates an artificial neural network;
Figure 6 illustrates an artificial neural network;
Figure 7 illustrates unfolding rules executed on a sample concept;
Figure 8 is a schematic representation of concept embedding and projecting processes;
Figure 9 illustrates an artificial neural network;
Figure 10 illustrates an artificial neural network;
Figure 11 illustrates concept embedding, projecting, and rotational alignment processes; and
Figure 12 is a schematic illustration of an ontology alignment apparatus; and
Figure 13 illustrates an exemplary hardware architecture of an ontology alignment apparatus.

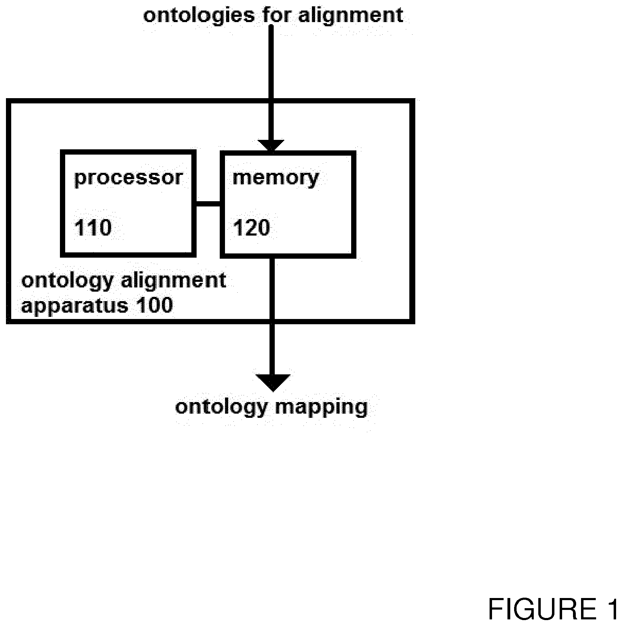

Figure 1 illustrates an ontology alignment apparatus 100. The ontology alignment apparatus 100 comprises processor hardware 110 and memory hardware 120. The processor hardware is coupled to the memory hardware. Coupling in this context is taken to mean configured to execute processing instructions stored on the memory hardware 120, and to write final and/or intermediate processing results to the memory hardware 120 during execution of said processing instructions, and/or to read data for processing during execution of said processing instructions from the memory hardware 120.

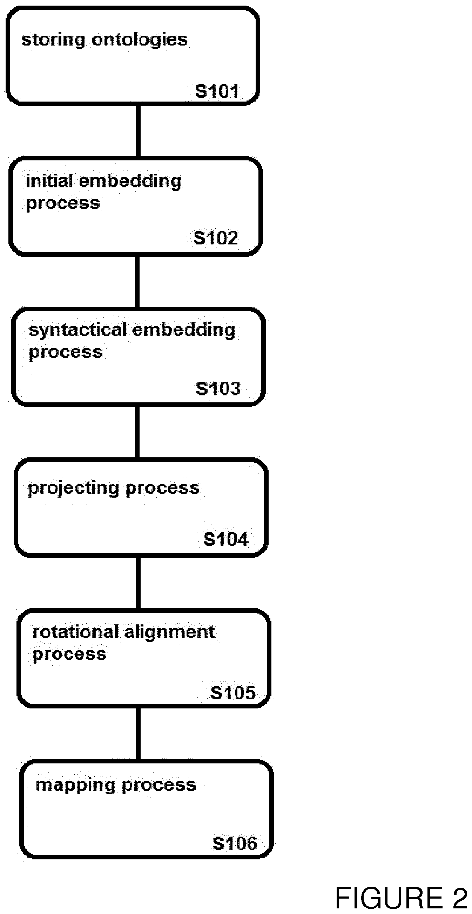

The ontology alignment apparatus 100 may be a computer or a plurality of computers interconnected to form a network. For example, the ontology alignment apparatus 100 may be apparatus providing software as a service, said software including the ontology alignment process of Figure 2. The computer or computers may be a server or servers configured to execute a process or service in response to receiving requests over a network from client computers.

The processor hardware 110 may be one or more interconnected central processing units (CPUs) configured to carry out data processing tasks. The processor hardware 110 may be part of a single computer, such as a server, or may be distributed across a plurality of such computers.

The memory hardware 120 may be one or more data storage units each configured to store data and to be read from and written to by the processor hardware 110. The memory hardware may comprise volatile memory directly accessible by the processor hardware 110 and non-volatile memory for persistent storage of data entities, such as ontologies and ontology mappings.

The inputs to and outputs from the ontology alignment apparatus 100 are illustrated schematically in Figure 1. The ontology alignment apparatus 100 is configured to receive a plurality of ontologies for alignment, and to generate a mapping between the plurality of ontologies. The ontology alignment apparatus 100 is thus configured to transform a plurality of heterogeneous ontological representations into a plurality of heterogeneous ontological representations logically mapped to one another by a mapping. The mapping may be a logical mapping defining closest matches between labelled ontological entities across the plurality of ontologies. The mapping may also define a physical mapping by storing ontological entities that are mapped to one another in physically adjacent storage addresses. Alignment between ontologies is taken to mean the mapping of entities in one ontology to those in another. Ontological entities may be limited to concepts, but may also include relationships between concepts.

An ontology is normally defined as an N-tuple comprising the following elements: $(C,R,L_C,L_R,f_C,f_R)$, where C is a finite set of concepts, R a finite set of relations (properties) and $L_C,L_R$ finite sets of symbols or labels assigned to concepts and relations respectively - $L_C$ and $L_R$ may not be disjoint, and $f_C,f_R$ are intra-ontological mappings (as distinct from the inter-ontological mappings generated at step S106): $f_C:L_C \rightarrow C$ and $f_R:L_R \rightarrow R$. Concepts and relationships define one or more hierarchical structures where two concepts from neighbouring hierarchy levels are connected by an "is-a" / subsumption relationship $(C \times C)$. For instance, Penguln = Bird defines/restricts Penguin "is-a" special type of Bird. Depending on the expressiveness of ontological language, which will vary between implementations of embodiments, relations may also form hierarchical structures, similar as concepts. For instance, one may consider relationship "has_daughter" is a sub-type of relationship "has_child".

Even though generally considered separately from the knowledge that instantiates the ontology, in some implementations ontology may be extended to include instances of concepts and relationships. Instances are individuals that are considered satisfying the constraints / restrictions defined on concepts.

The main constraint is that different ontologies should be of similar domains. In this case, words composing concepts may be largely interchangeable across different ontologies. In other words, ontologies subject to alignment are at least partially overlapping.

Ontology is normally formalised in and represented by ontology languages. Currently logic based languages such as OWL is widely used, and embodiments may store and process ontologies expressed in OWL. OWL is based on description logics. Less formal languages such as RDF provide light-weighted semantics. Embodiments may store and process ontologies expressed in RDF (resource description framework).

Ontology alignment is performed to identify corresponding entities (being either concepts or both concepts and relationships) from two or more ontologies. The two or more ontologies are from different data sources and there is an assumption that they have been independently developed (hence lack of standardisation) and thus present variances due to different modelling and naming conventions. Ontology alignment may be performed at the concept level as well as the instance level, and maps different ontologies with overlapping knowledge/subject matter/domain to one another.

The process performed by the ontology alignment apparatus 100 is illustrated in more detail in Figure 2.

At S101, ontologies for alignment are stored on the memory hardware 120. Storing ontologies, indeed, any process carried out on an ontology, is to be interpreted as being carried out on a representation of the ontology as stored by the apparatus 100.

Each of the plurality of ontologies for alignment is obtained and stored on the memory hardware 120. Such obtaining and storing may be performed under the instruction of a user of the ontology alignment apparatus 100, for example, issuing a request via a client machine and identifying a plurality of ontologies for alignment. The number of ontologies for alignment is at least two. Each of the plurality of ontologies defines a hierarchical structure of named concepts, the ontology comprising named concepts and relationships linking pairs of named concepts, the relationships including subsumption relationships, each named concept being named by a respectively assigned label. A subsumption relationship indicates a relationship across hierarchy levels, and may also be referred to as an "is-a" relationship.

At S102 an initial embedding process is performed on the labels assigned to the named concepts in the ontologies. The initial embedding process includes obtaining a quantitative representation of each words appearing in the labels. A simple example is a one-hot embedding process, in which the number of dimensions is equal to the number of different words across the plurality of ontologies, each dimension corresponding to a different one of the words, and each word vector representation is a 1 at the dimension corresponding to the word, and a 0 at every other dimension.

Depending on the embedding, an apparatus user may be requested to identify or input a text corpus of unstructured text for use in the initial embedding process (not required for one-hot embedding). Alternatively, a default corpus such as Wikipedia may be utilised.

Optionally, the initial embedding process may be performed by a pre-trained neural network based system such as Word2Vec.

S102 performs a general purpose initial word embedding in order to establish a quantitative expression of the concepts as a basis for the ontology alignment. For example, an apparatus user may, via a user interface, instruct this initial word embedding to be done on general purpose text corpora or purposely-built domain text data sets. Once a text corpora is selected, either via user input or as a default selection, the concepts are embedded as vectors. As an example, unsupervised neural network based word embedding may be executed, taking the unstructured text corpora as input and assigning each word in the labels assigned to the concepts of the ontology a real-numbered vector, indicating how the word should be projected in the word vector space. Optionally, a dimension reduction mechanism may bring down the vector to a smaller size (normally between 200 and 500) and smooth distributional variations of word correlations.

For instance, if we define $f_{WV}: W \to \mathbb{R}^n$ as the embedding function and "a cat is sitting on the chair ..." as the input data among other unstructured data, $f_{WV}(cat) = (0.2, -0.5, 0.88, 0.01, ...)$.

The apparatus 100 may be configured so that an apparatus users may manually instruct the apparatus 100 where to collect data for the initial word embedding S102 by providing an URL or may provide the data set as data files. The initial word embedding S102 may be performed with existing neural network based systems such as Word2Vec. If appropriate, standard embedding techniques may be used (e.g. GloVe), offering ready to use, global word embedding.

When working across multiple natural languages, text data for the initial embedding S102 in the multiple natural languages may need to be provided to the apparatus 100 and used to generate the embedding. A useful source of such multi-lingua data is Wikipedia which provides text in a wide variety of languages, and Wikipedia may be used as a default text corpora for this purpose.

In a simple example, the initial embedding S102 may simply be generating a "one-hot" quantitative representation of each of the words.

At step S103 the word vector representations of the words appearing in the labels assigned to concepts in the ontologies are used to generate syntactical concept vectors. The syntactical concept vectors for each ontology may be stored in a respective concept matrix, the concept matrix being a vector of vectors, or a vector lookup table.

The syntactical concept vectors are generated by first composing, for each concept, a set of words related to the concept in the ontology. In particular, the set of words may comprise: each word in the label assigned to the respective concept; and each word in the label assigned to each concept linked to the respective concept by a subsumption relationship. Furthermore, the set of words may comprise each word in the labels assigned to relationships linking the concept to other concepts, that is, denoting properties of the concept.

The syntactical concept vectors develop the initial embedding process by combining the initial word vector representations of the words appearing in the label assigned to a concept with the initial word vector representations of the other words in the set. Therefore, the syntactical concept vectors combine a quantitative representation of a concept name with a quantitative representation of words related to the concept in the ontology.

The output of the syntactical embedding step is a syntactic concept vector per concept that maps the concept to a high dimensional vector of real numbers. The distance or similarity between concept vectors should reflect the syntactic distance or similarity of ontological concepts. $\Phi(c): C \to \mathbb{R}^n$ may be used to denote the embedding process symbolically. $\Phi(O): O \to \mathbb{R}^{n \times m}$ may be used to denote the embedded matrix of all concepts of an ontology, where $n$ is the size of embedding vector and $m$ the size of all concepts in an ontology.

At S104 a projecting process is performed. The projecting process comprises obtaining a set of projections by projecting each of the syntactical concept vectors for the ontology onto a notional space common to the plurality of ontologies. The notional space is an n-dimensional space, which need not be represented in a manner which is visible to a user. The n-dimensional space is a tool for calculation, since by projecting the syntactical concept vectors into a space, distances between concepts, and by aggregation distances between ontologies, may be calculated or measured. A projection is taken to be the end point of the vector distal from the origin. A set of projections is obtained for each ontology. The sets are distinguishable from one another by the apparatus 100.

At step S105 the projections are rotationally aligned and optionally scaled, to find the best agreement between the sets, that is, the best rotational alignment. For example, the alignment may be measured by an aggregate of, for each projection in each set, the distance between the projection and each of its closest projections from the other sets. The sets of projections are rotated with respect to one another using a solving algorithm to minimise the aggregate.

At S106 a concrete output is generated in the form of a mapping file or mapping registry. An apparatus user may select a subset of the concepts as target concepts for mapping, or all concepts may be mapping targets. For each of the mapping targets, a mapping registry entry is generated, mapping the concept to the concept(s) represented by the closest projection from each of the other set(s) of projections and thus ontologies. Interoperability of data and operations relating to the mapping targets is achieved across the ontologies using the generated mapping.

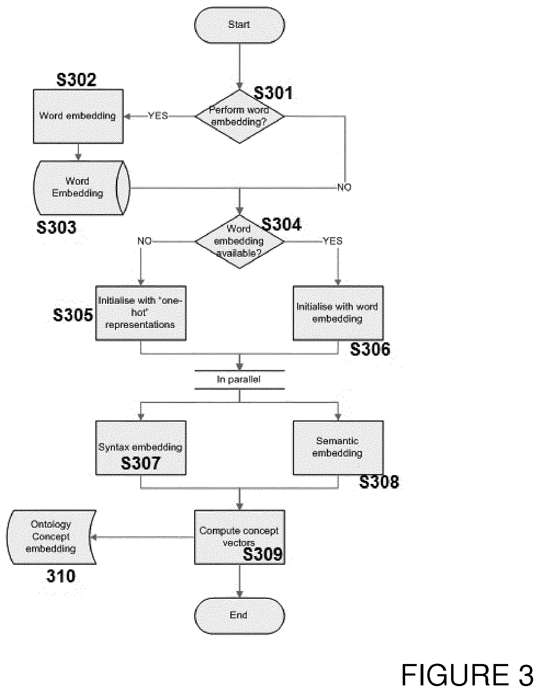

An exemplary procedure for obtaining vector representations of concepts in an ontology is set out in Figure 3. Figure 3 provides a particular example of steps S102 to S103, in the particular example of Figure 3, semantic embedding is executed alongside the syntactical embedding S103, and the vector for each concept output by the semantic embedding and the syntactical embedding combined.

At S301, a decision is made to perform artificial neural network based word embedding such as using a Word2Vec algorithm or not. The decision may be reached based on a selection made by an apparatus user via the user interface, or based on a default set by an administrator or hard-wired into the apparatus. If yes, then at S302 the Word2Vec algorithm is carried out for the words in the labels assigned to concepts in the ontology, and the initial word vector representations stored into memory hardware at S303. The flow proceeds to S304. If no at S301, the flow proceeds directly to S304.

At S304, it is determined whether there are initial word vector representations of the words appearing in the labels assigned to the concepts in the ontology stored in the word embedding storage area of the memory (from S303). If not, then one-hot representations are obtained as the initial word vector representations at S305. If so, then the initial word vector representations are retrieved from the storage at S306.

The initial word vector representations are used as inputs for the syntactical embedding process at S307 and the semantic embedding process at S308. The syntactical embedding process of S307 is as S103 of Figure 2. The semantic embedding process of S308 includes, for example, for each concept defined by the ontology, executing a series of unfolding processes on the concept, each unfolding process corresponding to an ontology unfolding rule and producing a respective unfolded concept comprising a group of atomic formulae; and compiling a semantic concept matrix comprising, for each concept defined by the ontology, a semantic concept vector comprising a component for each atomic formula in the group of atomic formulae of the respective unfolded concept.

At S309 the syntactical concept vector and semantic concept vector for each concept output by the respective embedding processes are stored, for example, in a storage area 310.

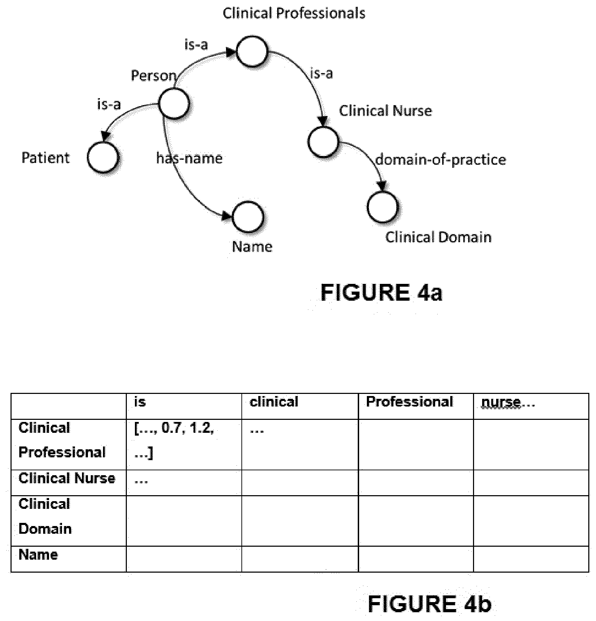

An exemplary syntactical embedding process, which may be used at S103 or S307, will now be described. Figure 4a illustrates an exemplary ontology and Figure 4b illustrates a corresponding syntactical concept matrix.

The syntactical concept matrix provides a look up table for all the words that appear in the context of a concept. In the above example, concept "Clinical Professional" will leverage words such as "is", "clinical", "professional" as well as those that are relevant through ontological structure, such as "nurse", "practice". This may also apply to instances which will have more specific words. The initial word vector representation of the words in the set of words forming the context of the concept are stored in the syntactical matrix concept entry for the concept.

The set of words $(C_t:W_3...W_k)$ may comprise the following::

   a. Split the words appearing in the concept term/name/label and include in the set

   b. Add to the set the words in the labels of immediate neighbours (the concept terms/names that are directly connected to the subject concept through named properties, upwards "is-a" relationship and downwards "is-a" relationship)

   c. Add to the set of names the property terms/names/labels linking to the concept in the ontology

The concept matrix represents the entire ontology with rows corresponding to concepts and columns corresponding to labels used by all the concepts. The matrix may be transposed switching the columns and rows around. There is one line (row/column) per concept. If rows represent the concepts, columns represent the words used in the concepts/labels.

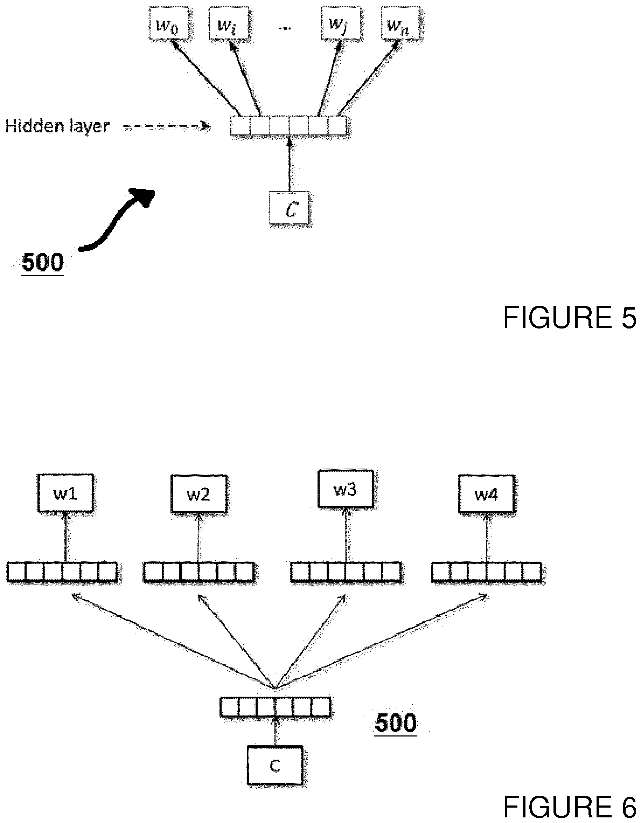

Figure 5 illustrates an artificial neural network 500 trained by the apparatus 100 to perform a word classification task. Optionally, an artificial neural network 500 is utilised to modify the syntactical concept vectors. The artificial neural network is, for example, a single layer artificial neural network with input as the syntactical concept matrix and output as the word classification. The apparatus 100 trains the artificial neural network by executing an algorithm such as the PV-DBOW algorithm to perform a word classification task. The error margin is back-propagated to adjust adjustable parameters/weights in the hidden layer.

After adjusting adjustable parameters (weights and/or biases) based on a word's chance to appear in the same context of a concept, a concept vector may be obtained as a by-product of the training process. The artificial neural network 500 may comprise one hidden layer and a softmax layer to project proper probability values. The output is modified word vectors, but it is the modified concept vectors, obtained by feeding forward the original syntactical concept vectors through the trained artificial neural network 500 and stored in a modified version of the syntactical concept vector, that will be combined with the semantic vectors and projected in S104.

The training process of the artificial neural network 500 is illustrated in more detail in Figure 6, in which the classification of word vectors w1 to w4 by the artificial neural network is illustrated.

The target of training is that for a word for instance w3 in the context of concept c, the artificial neural network 500 should present a positive classification of word vector w3, based on concept vector c. The training samples would be a list of pairs: (c, w1), (c, w2), (c, w3), etc. The cost function when (c, w1) is the input may be for example the difference between the computed probability of w1 and the pairing of c and w1. Optionally, in the apparatus 100, an established software library may be used which is optimised with techniques such as noise contrastive estimation, etc, to improve the performance.

An exemplary semantic embedding process, which may be used at S308, will now be described.

A semantic embedding process of ontological entities may be performed as follows:

1. Unfold concept definitions using unfolding rules of formal ontology language. Examples of unfolding rules that may be used are presented below.

- Conjunction will add both operands to F and remove the original conjunction formulae. For instance, if F={C \sqcap D}, after applying this rule, F={C, D}
- Union will duplicate the site and put operands in each. For instance, if F={C \sqcup D}, after applying this rule, F={C} and F={D}, as alternative to each other.
- Universal role restriction will add the mentioned concept to the formulae set of
- Existential role restriction will add several formulae (R(a, b), C) to F
- Role number restriction will add the minimum or maximum role instantiation to F.

The unfolding rules are formalised: *S:* a non-empty set of instances; $\mathcal{L}$ : associating each $a \in S$ with a set of concepts; $\mathcal{R}$ : mapping each property to a subset of $S \times S$. For all *a, b* $\in$ *S*, if *C, C_1, C_2* are concepts and *R* is property:

rule $\sqcap$ : $C_1 \sqcap C_2 \in \mathcal{L}(a)$, then $C_1 \in \mathcal{L}(a)$ and $C_2 \in \mathcal{L}(a)$.

rule $\sqcup$ : $C_1 \sqcup C_2 \in \mathcal{L}(a)$, then $C_1 \in \mathcal{L}(a)$ or $C_2 \in \mathcal{L}(a)$.

rule : $\forall R.C \in \mathcal{L}(a)$ and $\langle a, b \rangle \in \mathcal{R}(R)$, then $C \in \mathcal{L}(a)$.

rule $\exists$: $\exists R.C \in \mathcal{L}(a)$, then $\exists b.b \neq a$ and $\langle a, b \rangle \in \mathcal{R}(R)$ and $C \in \mathcal{L}(b)$.

rule $\geq$: $\geq_n R.C \in \mathcal{L}(a)$, then $\exists b_1, \ldots b_k.b_i \neq b_j$ and $\langle a, b_i \rangle \in \mathcal{R}(R)$ and $C \in \mathcal{L}(b_i)$ and $k \geq n$.

rule $\leq$: $\leq_n R.C \in \mathcal{L}(a)$, then $\exists b_1, \ldots b_k.b_i \neq b_j$ and $\langle a, b_i \rangle \in \mathcal{R}(R)$ and $C \in \mathcal{L}(b_i)$ and $k \leq n$.

2.The unfolding terminates when a fixed point is reached and the set of elements associated with each concept (depending on the coding language) are those from the following finite set: $x_i:C_p$, $(x_i,\gamma_i):R_p$, $x:\forall R_p.C_p$, where $C_p$ and $R_p$ are primitive concept and properties/relations (those that cannot be further unfolded).

3. As in the syntactical embedding process, optionally, an artificial neural network is used to embed the semantic concept vectors generated by the unfolding process in modified semantic concept vectors. The input is still a concept matrix while the output will be the above first order logic formulae that uniquely define a concept.

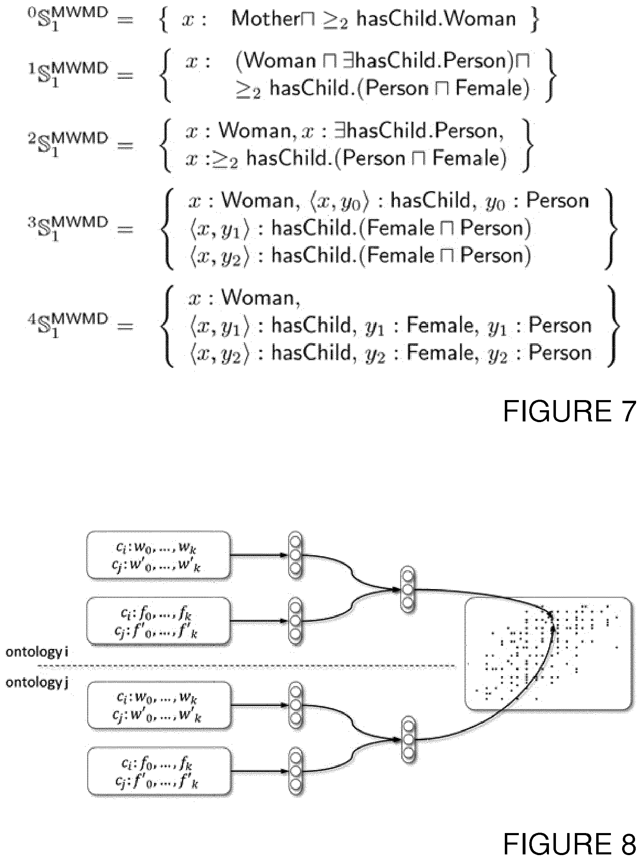

Figure 7 illustrates unfolding rules being executed on an exemplary concept "Mother with many daughters" (MWMD). A semantic concept matrix includes a line (row/column) per concept and a line (column/line) per atomic formula in the unfolded concept. Semantic concept vectors are different from syntactical concept vectors in the sense that the components of vectors are formulae resulted through concept unfolding process carried out on all concepts in an ontology. The unfolding process iteratively replaces composite formulae with the composing parts until no further unfolding may be performed. As a result, each concept is associated with a set of atomic formulae (or unit formulae). The initial value of a concept vector will be set by either of the two approaches:

1. Random initialisation, a random real numeric value will be assigned to each of the formulae; or
2. Summation of generic embedding values of the words appearing in the formulae.

After the unfolding of Figure 7, the semantic concept vector obtained is as follows:

|  | x:Woman | x-y1:hasChild | x-y2:hasChild | y1:Female | y2:Female | ... |
|---|---|---|---|---|---|---|
| MWMD | <real number> | <real number> | <real number> | <real number> | <real number> |  |

An artificial neural network may be trained to modify the semantic concept vectors. After adjusting adjustable parameters (weights and/or biases) based on a classification task of a concept against semantic formulae, a concept vector may be obtained as a by-product of the training process. The artificial neural network may comprise one hidden layer and a softmax layer to project proper probability values. The output is classification of semantic formulae, but it is the modified concept vectors, obtained by feeding forward the original semantic concept vectors through the trained artificial neural network and stored in a modified version of the semantic concept vector, that will be combined with the syntactical concept vectors and projected in S104.

The training samples would be a list of pairs: (c, f1), (c, f2), (c, f3), etc. The cost function when (c, w1) is the input may be for example the difference between the computed probability of w1 and the pairing of c and w1. Optionally, in the apparatus 100, an established software library may be used which is optimised with techniques such as noise contrastive estimation, etc, to improve the performance.

Figure 8 is a schematic illustration of the syntactical and semantic embedding processes and the projecting process. As illustrated by Figure 8, for each ontology, there is a set of semantic concept vectors and a set of syntactical concept vectors. For each concept in the ontology, the semantic concept vector is combined with the syntactical concept vector and they are projected into a notional space. The combining may be a simple vector concatenation (resulting in a 2m x n matrix where m is the number of concepts and n the dimensionality of the modified concept vectors).

Optionally, the combining may be achieved by a joint embedding process, which is set out below.

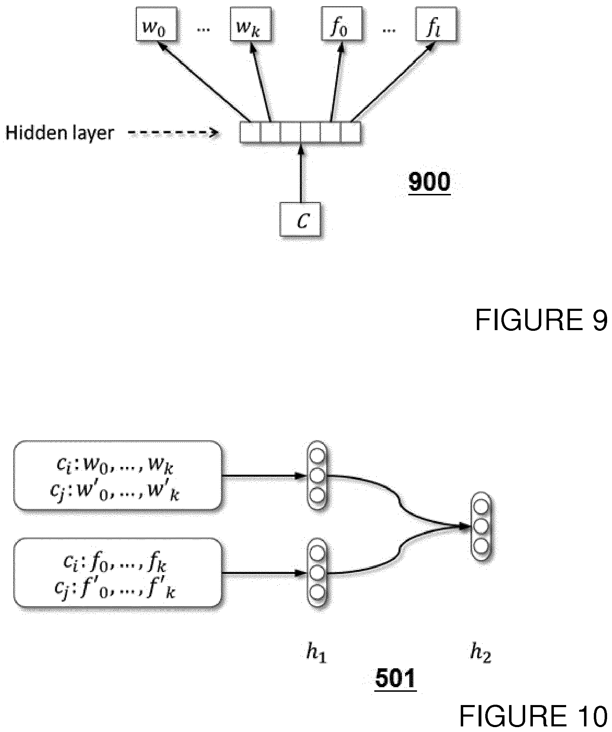

Joint embedding may be requested by an apparatus user via a user interface, or may be a default option predefined for the apparatus 100. In the joint embedding process, a single artificial neural network 900 is trained to classify a concept vector into word vectors and semantic formulae vectors, as illustrated in Figure 9.

In order to embed both syntactically and semantically using a single artificial neural network, the apparatus uses training pairs that cover both syntactical words and semantic formulae. In this case, the input data to the network is the concept vector and output will be a classification against both words and formulae. Training data is the pairs of (c, w1)...(c, f1)..., etc.

Figure 10 illustrates an alternative approach to combining the semantic and syntactical concept vectors. An artificial neural network 501 comprises two layers, a first layer h1 having adjustable parameters operating on the syntactical concept vectors and further adjustable parameters operating on the semantic concept vectors. A second layer h2 of adjustable parameters executes a weighted combination of the syntactical and semantic concept vectors for each concept. The adjustable parameters h1 and h2 are trained to minimise the distance between the syntactical concept vector and semantic concept vector for each concept.

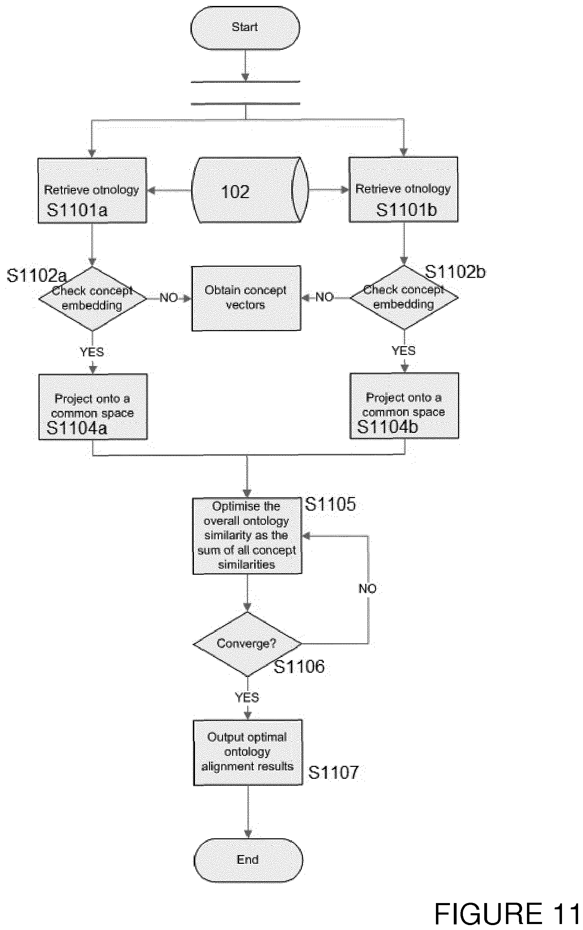

Figure 11 illustrates a projecting process, a rotational alignment process, and a mapping process. At S1101a and S1101b ontologies for alignment are retrieved from the memory 102. By retrieving, it is specifically meant that the ontologies for alignment are identified from among those stored in the memory 102. At S1102a and S1102b it is checked whether or not the syntactical concept vectors and/or semantic concept vectors, or combined concept vectors, for the ontologies are present in the memory 102, and if not, the flow proceeds to S1103. If they are present, the flow proceeds to S1104a or S1104b. At S1103, steps S102 and S103, or steps S301-S309, are performed in order to obtain concept vectors for the ontology. The check of S1102a or S1102b is repeated, and the flow this time proceeds to S1104a or S1104b.

At S1104a and S1104b the projecting process of S104 is performed. The projecting process converts the concept vectors for an ontology into a set of projections, comprising one projection per concept. In the case of joint embedding, a single concept vector exists per concept, which concept vector is projected into a notional space with dimensionality matching that of the vectors. In the case of there being a semantic concept vector and a syntactical concept vector per concept, the two vectors for the same concept may be concatenated in the projecting process.

At S1105 an optimisation algorithm, such as backwards error propagation or simulated annealing, is executed to maximise the similarity between the sets of projections by adjusting either rotational alignment, or by adjusting scaling and rotational alignment. The similarity measure may be, for example, summed over all of the concepts for each ontology, the distance to the closest projection from each other set, with the optimisation algorithms seeking to minimise that sum.

The rotational alignment process of S105 and S1105 may comprise, following the projecting of the concept embedding of different ontologies onto the same notional space:

1. Rotate or scale the set of projections of each ontology to minimise an aggregate distance between sets;
2. If an optimal situation is reached, concept C of ontology O is considered to be aligned to concept C' of ontology O' if $\Phi(C')$ is the closest vector to $\Phi(C)$.

For simplicity, only rotation is considered below:

$$\arg\max_{C \in O, C' \in O'} \left( stm\left( \Phi(C) \cdot V, \Phi(C') \right) + \alpha \right)$$

By adjusting the weights in a bias vector $V$, the apparatus 100 rotates one set of projections to maximum the overall similarity of pairs of concepts in two ontologies. This may be generalised to multiple ontologies, if they are all projected onto the same notional space (with the same dimensionality).

At S1106 it is verified whether a solution has been reached, i.e. whether the optimisation algorithm has converged on an optimal similarity. If not, the optimisation of S1105 continues. If so, the flow proceeds to S1107.

S1107 corresponds to S106 of Figure 2. In particular, for each concept $C \in 0$, find the closest concept from each other ontology $C' \in O'$ such that

$$\exists C_i' \ne C' . \Delta(C', C) > \Delta(C_i', C),$$

there exists another concept in that other ontology $O'$ whose distance to the target concept $C$ is smaller than that between $C'$ and $C$. This closest concept is then considered the correspondence and the tuple $(C,C')$ an alignment pair, recording in a mapping registry for the target concept $C$.

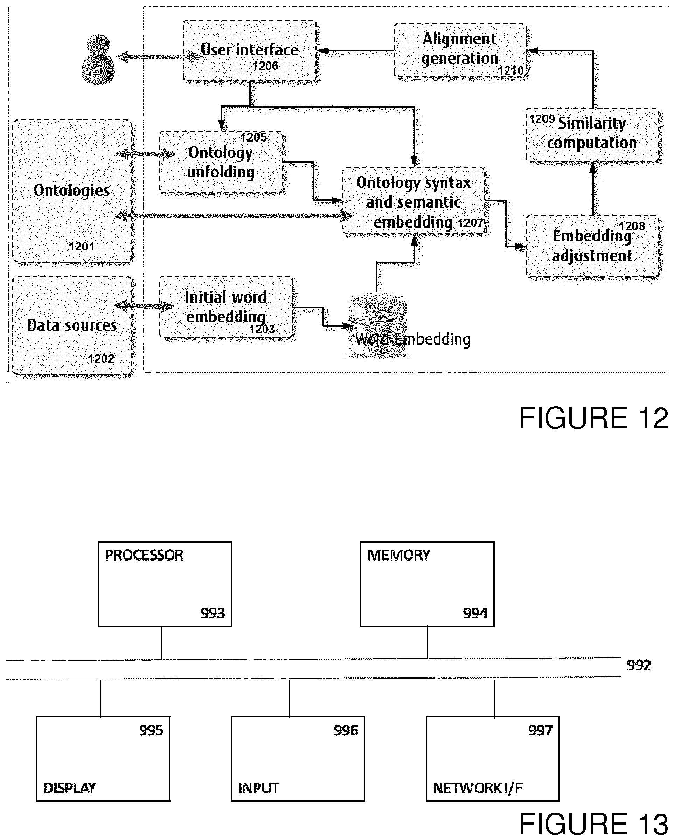

Figure 12 is a schematic illustration of an ontology alignment apparatus 1200. The individual components may be implemented by processor hardware 110 executing processing instructions stored on a coupled memory hardware 120 and reading data from and writing data to said coupled memory hardware 120.

The ontologies 1201 are stored in a memory location accessible to the ontology alignment apparatus 1200. The data sources 1202 are stored in a memory location accessible to the ontology alignment apparatus 1200.

The initial word embedding component 1203 executes the initial embedding process of S102. In particular, unstructured text from data sources 1202 is read and used to compose an initial word vector representation of each word appearing in the labels assigned to the concepts in each of the ontologies being aligned. A storage area 1204 stores the initial word vector representations.

The ontology unfolding component 1205 accesses the stored ontologies 1201 to execute the semantic unfolding rules on the concepts of the ontology in order to obtain the semantic concept vector representation of each concept, as in S308 of Figure 3, which representations are held by the ontology syntax and semantic embedding component 1207. The ontology syntax and semantic embedding component 1207 executes the syntactical embedding process S103 of Figure 2 or S307 of Figure 3, and holds the syntactical concept vectors so generated.

The embedding adjustment component 1208 uses the artificial neural networks as described in relation to Figures 5, 6, 8, 9 & 10 to generate modified versions of the syntactical and semantic concept vectors.

The similarity computation component 1209 executes the projecting process of S104 of Figure 1 or S1104a or S1104b of Figure 11, and also the rotational alignment process of S105 of Figure 1 or S1105-S1106 of Figure 11.

The alignment generation component 1210 executes the mapping process of S106.

The user interface 1206 provides a mechanism to accept inputs from a manual user of the apparatus 1200. For example, identification of ontologies for alignment and a location (URL) from which they are retrievable, identification of unstructured data for concept embedding processes, selection of execution options such as whether to execute the syntactical embedding process or both syntactical and semantic embedding processes.

FIGURE 13 is a block diagram of a computing device, such as a server or data storage server, which embodies the present invention, and which may be used to implement a method of ontology alignment. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the ontology alignment apparatus described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 13. Such a computing device need not have every component illustrated in Figure 13, and may be composed of a subset of those components. A method embodying the present invention may be carried out by a single computing device in communication with one or more data storage servers via a network. The computing device may be a data storage itself storing ontologies and data (knowledge bases) instantiating the stored ontologies.

A method embodying the present invention may be carried out by a plurality of computing devices operating in cooperation with one another. One or more of the plurality of computing devices may be a data storage server storing at least a portion of the mapping registry generated at S106.

### Claims

1. An ontology alignment apparatus, comprising processor hardware and memory hardware coupled to the processor hardware, the memory storing a plurality of ontologies for alignment, each of the plurality of ontologies defining a hierarchical structure of named concepts, the ontology comprising named concepts and relationships linking pairs of named concepts, the relationships including subsumption relationships, each named concept being named by a respectively assigned label, the processor being configured to perform, for each of the plurality of ontologies:

    an initial embedding process, comprising:

        for every word appearing in the labels assigned to named concepts defined by the ontology, obtaining an initial word vector representation of the word;

    a syntactical embedding process, comprising:

        in respect of each concept defined by the ontology, forming a set of words comprising:

            each word in the label assigned to the respective concept; and
            each word in the label assigned to each concept linked to the respective concept by a subsumption relationship;

        compiling a syntactical concept matrix comprising, for each concept defined by the ontology, a syntactical concept vector representing the concept and comprising the initial word vector representation of each word in the respective set of words;

    a projecting process comprising:

        obtaining a set of projections by projecting each of the syntactical concept vectors for the ontology onto a notional space common to the plurality of ontologies;

    the processor being further configured to perform, for the plurality of ontologies collectively:

        a rotational alignment process comprising:

            rotating the sets of projections relative to one another in the notional space to maximise the mutual rotational alignment between the sets; and

a mapping process comprising:

determining, for target projections among the set of projections for an ontology among the plurality of ontologies, a spatially closest projection from each of the other sets of projections in the notional space after said rotating, and adding to a mapping registry a registry entry mapping the concept represented by the vector of the target projection to the or each of the concepts respectively represented by the vector or vectors of the spatially closest projections.

**2.** The ontology alignment apparatus according to claim 1, wherein the syntactical embedding process further comprises:

training an artificial neural network to modify the syntactical concept vectors by executing a word classification algorithm on a plurality of training vector pairs each comprising one of the syntactical concept vectors and one of the word vector representations of a word in the respective set of words;
obtaining a modified syntactical concept vector for each concept by feeding forward through the trained artificial neural network the respective syntactical concept vector from the syntactical concept matrix;

and, wherein the syntactical concept vectors projected in the projecting process are the modified syntactical concept vectors.

**3.** The ontology alignment apparatus according to claim 1 or 2, the processor being further configured to perform, for each of the ontologies, a semantic embedding process comprising:

for each concept defined by the ontology, executing a series of unfolding processes on the concept, each unfolding process corresponding to an ontology unfolding rule and producing a respective unfolded concept comprising a group of atomic formulae; and
compiling a semantic concept matrix comprising, for each concept defined by the ontology, a semantic concept vector comprising a component for each atomic formula in the group of atomic formulae of the respective unfolded concept;

wherein the projecting process further comprises:

obtaining semantic projections by projecting each of the semantic concept vectors for the ontology onto the notional space common to the plurality of ontologies, and adding the semantic projections to the set of projections for the respective ontology; or
wherein the projection for each concept is a sum of the modified syntactical concept vector and the modified semantic concept vector.

**4.** The ontology alignment apparatus according to claim 3, wherein the semantic embedding process further comprises:

training an artificial neural network to modify the semantic concept vectors by executing a word classification algorithm on a plurality of training vector pairs each comprising one of the semantic concept vectors and one of the semantic concept vector component atomic formulae;
obtaining a modified semantic concept vector for each concept by feeding forward through the trained artificial neural network the respective semantic concept vector from the semantic concept matrix;
and, wherein the semantic concept vectors projected in the projecting process are the modified semantic concept vectors.

**5.** The ontology alignment apparatus according to claims 2 & 4, wherein

the artificial neural network trained to modify the syntactical concept vectors is a separate artificial neural network from the artificial neural network trained to modify the semantic concept vectors.

**6.** The ontology alignment apparatus according to claims 2 & 4, wherein

the artificial neural network trained to modify the syntactical concept vectors is the same artificial neural network as the artificial neural network trained to modify the semantic concept vectors.

**7.** The ontology alignment apparatus according to claim 6, wherein

the artificial neural network comprises: in a first layer, a first set of adjustable parameters operating on the syntactical concept vectors; and in the first layer, a second set of adjustable parameters operating on the semantic concept vectors and separate from the first set of adjustable parameters; and in a second layer, a third set of adjustable parameters operating on both the results of the first set of adjustable parameters operating on the syntactical concept vectors and the results of the second set operating on the semantic concept vectors; and

training the artificial neural network includes executing a stochastic gradient descent algorithm to minimise an aggregate of distances between the modified syntactical vector and the modified semantic vector for the same concept.

**8.** The ontology alignment apparatus according to any of the preceding claims, wherein

in the initial embedding process, the initial word vector representation of each word is a one-hot vector.

**9.** The ontology alignment apparatus according to any of claims 1 to 7, wherein

in the initial embedding process, the initial word vector representation of each word is obtained by executing a pretrained unsupervised algorithm for word vector representation.

**10.** The ontology alignment process according to any of the preceding claims, wherein

in the plurality of ontologies, the relationships linking pairs of named concepts are named relationships, each relationship being named by a respectively assigned label, and
in the syntactical embedding process, the set of words further comprises:

each word in the labels assigned to relationships linking the concept to other concepts.

**11.** A computer-implemented ontology alignment method, comprising:

storing a plurality of ontologies for alignment, each of the plurality of ontologies defining a hierarchical structure of named concepts, the ontology comprising named concepts and relationships linking pairs of named concepts, the relationships including subsumption relationships, each named concept being named by a respectively assigned label;
the method further comprising, performing, for each of the plurality of ontologies:

an initial embedding process, comprising:

for every word appearing in the labels assigned to named concepts defined by the ontology, obtaining an initial word vector representation of the word;

a syntactical embedding process, comprising:

in respect of each concept defined by the ontology, forming a set of words comprising:

each word in the label assigned to the respective concept; and
each word in the label assigned to each concept linked to the respective concept by a subsumption relationship;

compiling a syntactical concept matrix comprising, for each concept defined by the ontology, a syntactical concept vector representing the concept and comprising the initial word vector representation of each word in the respective set of words;

a projecting process comprising:

obtaining a set of projections by projecting each of the syntactical concept vectors for the ontology onto a notional space common to the plurality of ontologies;

14

the method further comprising performing, for the plurality of ontologies collectively:

a rotational alignment process comprising:

rotating the sets of projections relative to one another in the notional

space to maximise the mutual rotational alignment between the sets; and a mapping process comprising:

determining, for target projections among the set of projections for an ontology among the plurality of ontologies, a spatially closest projection from each of the other sets of projections in the notional space after said rotating, and adding to a mapping registry a registry entry mapping the concept represented by the vector of the target projection to the or each of the concepts respectively represented by the vector or vectors of the spatially closest projections.

12. A computer program which, when executed by a computing apparatus, causes the computing apparatus to perform a method according to claim 11.

13. A non-transitory computer-readable medium storing the computer program of claim 12.

ontologies for alignment

processor

110

memory

120

ontology alignment
apparatus 100

ontology mapping

FIGURE 1

FIGURE 2

FIGURE 3

Clinical Professionals

is-a

Person

is-a

Patient

is-a

has-name

Clinical Nurse

domain-of-practice

Name

Clinical Domain

## FIGURE 4a

|  | is | clinical | Professional | nurse... |
|---|---|---|---|---|
| Clinical Professional | [..., 0.7, 1.2, ...] | ... |  |  |
| Clinical Nurse | ... |  |  |  |
| Clinical Domain |  |  |  |  |
| Name |  |  |  |  |

## FIGURE 4b

$w_0$  $w_i$  ...  $w_j$  $w_n$

Hidden layer ------>

$C$

**500**

FIGURE 5

w1  w2  w3  w4

**500**

C

FIGURE 6

$$^0\mathbb{S}_1^{\text{MWMD}} = \{ \ x : \quad \text{Mother} \sqcap \geq_2 \text{hasChild.Woman} \ \}$$

$$^1\mathbb{S}_1^{\text{MWMD}} = \left\{ \begin{array}{l} x : \quad (\text{Woman} \sqcap \exists\text{hasChild.Person}) \sqcap \\ \qquad \geq_2 \text{hasChild.(Person} \sqcap \text{Female)} \end{array} \right\}$$

$$^2\mathbb{S}_1^{\text{MWMD}} = \left\{ \begin{array}{l} x : \text{Woman}, x : \exists\text{hasChild.Person}, \\ x : \geq_2 \text{hasChild.(Person} \sqcap \text{Female)} \end{array} \right\}$$

$$^3\mathbb{S}_1^{\text{MWMD}} = \left\{ \begin{array}{l} x : \text{Woman}, \langle x, y_0 \rangle : \text{hasChild}, y_0 : \text{Person} \\ \langle x, y_1 \rangle : \text{hasChild.(Female} \sqcap \text{Person)} \\ \langle x, y_2 \rangle : \text{hasChild.(Female} \sqcap \text{Person)} \end{array} \right\}$$

$$^4\mathbb{S}_1^{\text{MWMD}} = \left\{ \begin{array}{l} x : \text{Woman}, \\ \langle x, y_1 \rangle : \text{hasChild}, y_1 : \text{Female}, y_1 : \text{Person} \\ \langle x, y_2 \rangle : \text{hasChild}, y_2 : \text{Female}, y_2 : \text{Person} \end{array} \right\}$$

FIGURE 7

FIGURE 8

Hidden layer $\dashrightarrow$ $w_0$ ... $w_k$ $f_0$ ... $f_l$ $C$ **900**

## FIGURE 9

$c_i: w_0, ..., w_k$
$c_j: w'_0, ..., w'_k$

$c_i: f_0, ..., f_k$
$c_j: f'_0, ..., f'_k$

$h_1$ $h_2$

**501**

## FIGURE 10

Start

Retrieve otnology
S1101a

102

Retrieve otnology
S1101b

S1102a
Check concept embedding

NO

Obtain concept vectors

NO

S1102b
Check concept embedding

YES

YES

Project onto a common space
S1104a

Project onto a common space
S1104b

Optimise the overall ontology similarity as the sum of all concept similarities

S1105

Converge?

NO

S1106

YES

Output optimal ontology alignment results

S1107

End

FIGURE 11

FIGURE 12

FIGURE 13

Europäisches
Patentamt

European
Patent Office

Office européen
des brevets

# EUROPEAN SEARCH REPORT

Application Number

EP 17 17 2311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Harmen Prins: "Matching ontologies with distributed word embeddings Acknowledgements",<br><br>, 7 July 2016 (2016-07-07), XP055385306, Retrieved from the Internet: URL:http://www.ru.nl/publish/pages/769526/z_harmen_prins.pdf [retrieved on 2017-06-27] * the whole document * | 1-13 | INV. G06F17/30<br><br>ADD. G06N3/04 |
| A | YOAV GOLDBERG: "A Primer on Neural Network Models for Natural Language Processing", JOURNAL OF ARTIFICIAL INTELLIGENCE RESEARCH, vol. 57, 2 November 2016 (2016-11-02), pages 345-420, XP055385582, * the whole document * | 1-13 | |
| A | YE ZHANG ET AL: "Neural Information Retrieval: A Literature Review", ARXIV.ORG, CORNELL UNIVERSITY LIBRARY, 201 OLIN LIBRARY CORNELL UNIVERSITY ITHACA, NY 14853, 18 November 2016 (2016-11-18), XP080732897, * the whole document * | 1-13 | TECHNICAL FIELDS SEARCHED (IPC)<br><br>G06F<br>G06N |

The present search report has been drawn up for all claims

| Place of search | Date of completion of the search | Examiner |
|---|---|---|
| The Hague | 28 June 2017 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)